(19) Europäisches Patentamt
European Patent Office
Office européen des brevets

(11) **EP 2 683 075 A1**

(12) **EUROPEAN PATENT APPLICATION**
published in accordance with Art. 153(4) EPC

(43) Date of publication:
**08.01.2014 Bulletin 2014/02**

(51) Int Cl.:
*H02P 9/02* (2006.01)      *G05F 1/66* (2006.01)
*H02M 7/48* (2007.01)      *H02P 23/14* (2006.01)

(21) Application number: **12751754.8**

(22) Date of filing: **27.02.2012**

(86) International application number:
**PCT/ES2012/000047**

(87) International publication number:
**WO 2012/117132 (07.09.2012 Gazette 2012/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2011 ES 201100222 P**

(71) Applicant: **Abengoa Solar New Technologies, S.A. 410108 Sevilla (ES)**

(72) Inventors:
• **RODRIGUEZ CORTÉS, Patíro**
  **E-41014 Sevilla (ES)**

• **CANDELA GARCIA, José Ignacio**
  **E- 41014 Sevilla (ES)**
• **ROCABERT DELGADO, Joan**
  **E- 41014 Sevilla (ES)**
• **TEODORESCU, Remus**
  **E-41014 Sevilla (ES)**

(74) Representative: **Garcia-Cabrerizo y del Santo, Pedro Maria**
  **Oficina Garcia Cabrerizo, S.L.,**
  **Vitruvio, 23**
  **28006 Madrid (ES)**

(54) **VIRTUAL CONTROLLER OF ELECTROMECHANICAL CHARACTERISTICS FOR STATIC POWER CONVERTERS**

(57)    The invention relates to a virtual controller of electromechanical characteristics for a static power converter that includes a PLC (23) (power loop controller), which receives, at the input thereof, the power difference ($\Delta$P) between the input power ($P_{in}$) (power delivered to the converter by the primary source) and the power delivered to the grid ($P_{elec}$) and is able to modify online the parameters of the virtual inertia coefficient and the damping factor as a function of the desired response and of the grid conditions for different frequency ranges.

**FIGURE 2**

## Description

## Object of the invention

The present invention relates to a controller of the virtual electromechanical characteristic for static power converters that, connected to the electric grid, allows the control of the power injected thereto. The main application of this invention is distributed generation plants and especially in renewable energy plants such as wind and photovoltaic energy.

## Background of the invention

The sources of renewable energy, mainly wind power plants (WIN) and photovoltaic (PH) power plants, have ceased to be a marginal resource in the generation of electricity. The generators of PH plants use power converters to connect to the electric grid. These power converters, also known as inverters, inject current to the voltage of the grid to supply power to the same. In normal operating conditions, the PH inverters inject single-phase o triphase sinusoidal currents to the grid, depending on the power range of the generator. Normally, the currents injected to the grid tend to be sinusoidal and are in phase with the voltages of the coupling point to maximize the amount of active power being generated. There are no PH inverters in the market, at least in on a generalized basis, that inject currents to the quadrature with the grid voltages, which allows controlling the reactive power injected to the grid with the purpose of regulating the voltage level at the coupling point.

When the grid voltage is affected by a perturbation, such as imbalances, transients, or harmonics, which is usual in electric grids, conventional PH inverters experience problems to remain appropriately synchronized with the grid voltage, which leads to uncontrolled power flows that cause the PH inverter to worsen the situation of the failure of the grid. With more serious grid perturbations, such as voltage dips, short-circuits, or power oscillations, conventional PH inverters cannot offer an appropriate support to the electric grid to help maintain the generation system active. In fact, these serious transient perturbations usually cause the disconnection of the grid in the majority of the commercial PH inverters due to the triggering of some of its overcurrent or overvoltage protections.

In order to minimize these inconveniences, virtual synchronous generators are known in the state of the art that attempt to emulate the behavior of a real synchronous generator. A classic yet very efficient manner to regulate the active and reactive power exchanged by a synchronous generator with the grid consists in controlling the difference between the amplitude and the phase angle between the induced voltage in the stator (e) and the voltage of the grid at the connecting point (v).

The active and reactive power exchanged between the synchronous reactor and the grid is calculated as follows:

$$P = \frac{EV}{Z}\cos(\phi - \delta) - \frac{V^2}{Z}\cos(\phi),$$

$$Q = \frac{EV}{Z}\sin(\phi - \delta) - \frac{V^2}{Z}\sin(\phi),$$

$V$ and $E$ being the efficient values of the grid voltage ($v$) and the induced voltage in the stator (e) and $\delta$ the phase angle.

Given that a synchronous generator has a majorly inductive impedance and the phase angle $\delta$ is small, the previous expressions can be approximated as follows:

$$P = P_{max} \cdot \delta \; ; \; P_{max} = \frac{EV}{X}$$

$$Q = \frac{V}{X}(E - V).$$

These expressions indicate that the active power delivered by the synchronous generator to the grid depends lineally on the angle $\delta$, while the reactive power depends on the amplitude difference between $E$ and $V$.

This simplicity in the regulation of the active and reactive power delivered to the grid turns the synchronous generator into the best resource of the power generation systems. However, synchronous generators present problems in their dynamic electromechanical response.

Under the simplifying hypothesis indicated above, and taking into account the almost negligible damping of the system, the transfer function of the electromechanical loop in the synchronous generator is the following:

$$\frac{P_{elec}}{P_{mec}} = \frac{\left(\sqrt{\frac{P_{Max}}{J \cdot \omega_s}}\right)^2}{s^2 + \left(\sqrt{\frac{P_{Max}}{J \cdot \omega_s}}\right)^2} = \frac{\omega_n^2}{s^2 + \omega_n^2}$$

$P_{elec}$ being the electric power at the output of the generator, $P_{mec}$ the input mechanical power into the synchronous generator through its axis, $P_{max}$ the maximum power transferable to the grid (defined above), J the inertia of the generator, and $\omega_s$ the synchronous angular frequency of the grid. This transfer function has a

natural oscillation frequency $\omega_n$ that causes the system to present a permanent oscillation (or weakly damped in practice) in the output power with respect to any perturbation in the grid: changes in charge, changes in the interconnection impedances, short-circuits, etc. This natural oscillation frequency varies with the connection topology of the grid and with the points between which the oscillation takes place, being a value that is not determined based on the parameters of the machine only.

There are many attempts in the study of the state of the art to solve this problem. The installation of damper windings is the generalized solution at the synchronous machine level, but the damping degree achieved with them is very small. Other electromechanical oscillation attenuation systems have been developed at the machine control level, such as the Power System Stabilizer (PSS), which is currently incorporated to almost all synchronous machine control systems.

Another problem related to the electromechanical response of the synchronous generator is the need to maintain synchronism after a grid failure. Synchronous generators tend to increase their speed during the failure; after the elimination of this failure, the discrepancy existing between the generator and the rest of the grid can render the reestablishment of the synchronous connection impossible. In order to limit this phenomenon, solutions such as quick reconnection switches, brake resistors, and quick intake valves are implemented, the machine having to present the maximum inertia possible under these circumstances.

If a generator has been disconnected and is desired to be reconnected, the synchronization process can be very fragile depending on the weakness of the grid at the coupling point, with the possibility of creating an inadmissible perturbation on the same during the synchronization process.

Next, a series of articles and papers located in the state of the art and related to the emulation of the synchronous generator are presented below:

- Visscher, K.; De Haan, S.W.H.; "Virtual synchronous machines (VSG's) for frequency stabilisation in future grids with a significant share of decentralized generation," SmartGrids for Distribution, 2008. IET-CIRED. CIRED Seminar, vol., no., pp.1-4, 23-24 June 2008.
- T. Loix, S. De Breucker, P. Vanassche, J. Van den Keybus, J. Driesen, and K. Visscher, "Layout and performance of the power electronic converter platform for the VSYNC project," presented at PowerTech, 2009 IEEE Bucharest, 2009.
- Beck, H.-P.; Hesse, R.; "Virtual synchronous machine," Electrical Power Quality and Utilisation, 2007. EPQU 2007. 9th International Conference on , vol., no., pp.1-6, 9-11 Oct. 2007.
- Zhong, Q; Weiss, G; , "Synchronverters: Inverters that Mimic Synchronous Generators," Industrial Electronics, IEEE Transactions on , vol. PP, no.99, pp.1, 0 doi: 10.1109/TIE.2010.2048839.
- Z. Lidong, L. Hamefors, and H. P. Nee, "Power-Synchronization Control of Grid-Connected Voltage-Source Converters," Power Systems, IEEE Transactions on, vol. 25, pp. 809-820. May 2010.

These references describe the control of an electronic converter with the purpose of emulating, to a higher or lower degree, the equations of a real synchronous generator, that is to say, with its parameters, advantages, and inconveniences. The invention object of the present patent does not intend to emulate a synchronous machine, but achieve an advanced control system capable of improving the interconnection between the converter and the electric grid. Even though the controller object of the present invention uses the inertia and damping factor variables, it does not intend to replicate the effect thereof on the real synchronous generator; rather, the values of these virtual variables will be dynamically adapted to the present scenario at any given time in the grid (perturbations, failures, desynchronization) and will be different for the different frequency ranges of the potential power oscillations/perturbations.

Thus, the invention presented herein consists of a new controller that, by extending the electromechanical model of a real synchronous generator, provides the static power converters with new functionalities to solve the limitations inherent to real synchronous generators, and by affinity, to the electronic power converters attempting to emulate them.

## Description of the invention

The controller of the virtual electromechanical characteristic for static power converters of the present invention comprises an electromechanical control loop that enables the online adjustment of parameters such as natural frequency, inertia, and damping factor, with the purpose of improving the operation of said power converter.

The electromechanical control loop proposed herein is governed by a closed loop transfer function relating the power delivered to the grid $P_{out}$ and the input power into the converter $P_{in}$, which may be dynamically parameterized by means of a virtual inertia coefficient and a damping factor to achieve an optimized response to the contour conditions of the power converter.

The electromechanical control loop comprises a PLC ("power loop controller") that receives the difference between the input power (power delivered to the converter by the primary source) and the power delivered to the grid, and a series of parameters, such as natural frequency and the damping factor, among others, at the input.

The virtual internal electromotive force of the power converter is obtained at the output of the PLC, which is integrated to obtain the phase of the virtual internal electromotive force vector that ultimately determines a set of virtual tri-phase voltages.

This controller of the electromechanical characteristics achieves great flexibility in the behavior of the power converter connected to the grid and allows, for example, reducing the inertia at certain moments to facilitate its connection to the grid, or allocating higher inertias in the frequency ranges in which perturbations are desired to be eliminated.

It should be noted at this point that not all existing techniques to control the active power in the connection to the electric grid of a power converter implement the inertia characteristic. On the other hand, the techniques applying this concept only attempt to faithfully replicate the electromechanical characteristic of the real synchronous generator without applying any type of additional improvement intending to solve the inconveniences inherent to the electromechanical system of the real synchronous generator. Thus, the controller of the electromechanical characteristic object of this invention presents an evident difference with respect to existing techniques, given that it allows optimizing, on line and in an adaptive manner, the virtual inertia coefficient and the damping factor according to the operating conditions of the power converter, such that establishing the capacity presented by the generator to attenuate different power oscillations existing in the grid (inter-plant, inter-area...) and in the primary generation source (mechanical and structural resonances), is possible.

On the other hand, the controller of the present invention uses different values, both for the virtual inertia coefficient and the damping factor, for different frequency ranges, which supposes important progress with respect to other existing techniques given that it allows adjusting the response of the power converter for each frequency range of the possible existing power oscillations.

The controller of the virtual electromechanical characteristic of the present invention, unlike the solutions found in the study of the state of the art, is not based on the simple imitation of the electromechanical characteristic of a real synchronous generator, but it is configured as an adjustable power controller, which allows reaching an optimal response for the different perturbations and power fluctuations existing in the grid or in the primary source, allowing the instantaneous adjustment of the value of the virtual inertia coefficient and the damping factor of the control loop for each frequency range at any given moment.

**Description of the drawings**

With the purpose of facilitating the comprehension of the present invention, several figures have been attached representing the following in an illustrative rather than limitative manner:

- Figure 1 shows a general scheme of the electromechanical loop of a conventional synchronous generator belonging to the state of the art;

- Figure 2 shows a simplified schematic representation of the electromechanical loop of the controller object of the present invention;

- Figure 3 shows a scheme of the implementation of the electromechanical loop of the controller object of the present invention wherein multiple virtual inertia coefficients and damping factors are used for the different frequency ranges.

- Figure 4 shows a general block diagram of the controller of the virtual electromechanical characteristic object of the present invention.

The references being:

(21) Controller of the virtual electromechanical characteristic;
(22) Controller of the inertia and damping factor;
(23) PLC ("Power Loop Controller");
(24) VCO ("Voltage Controller Oscillator").

**Detailed description of the invention**

Next, a detailed description of the invention is made below based on the figures represented herein.

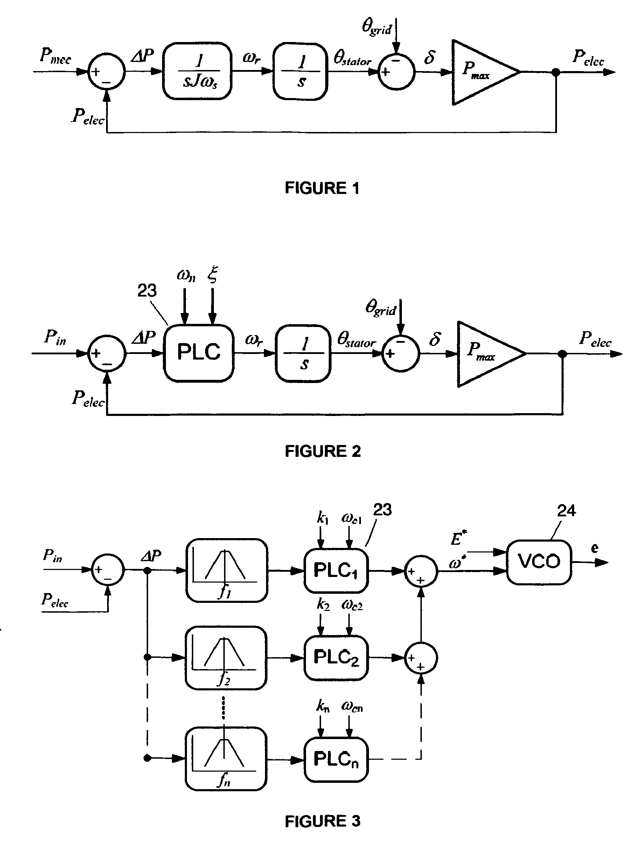

Figure 1 shows the general scheme of the electromechanical power loop of a conventional synchronous generator. This generator presents a series of inherent limitations and inconveniences that were described above.

As shown in figure 2, the controller of the virtual electromechanical characteristic of static power converters object of the present invention consists of a control loop comprising a PLC (23) ("power loop controller") which receives, at the input, the power difference ($\Delta P$) existing between the input power ($P_{in}$) (power delivered to the converter by the primary source) and the power delivered to the grid ($P_{elec}$), as well as a series of parameters establishing the natural frequency and the damping factor ($\xi$) desired at any given moment for the power loop controller. The frequency of the virtual internal locomotive force ($\omega_r$) is obtained at the output of the PLC, which, once integrated, allows determining the phase of the virtual internal voltages generated in the power converter.

The PLC can be implemented in different ways, in all cases intended to obtain a closed loop function in which the position of its poles can be established at will, in such a way that aspects such as establishment time, overshoots, the natural pulsing or the damping factor can be determined. A preferred embodiment of the PLC matches the one represented by means of a following formula:

$$PLC(s) = k \frac{\omega_c}{s + \omega_c}.$$

k being the gain and $\omega_c$ being the cutoff frequency of the controller. These parameters in turn depend on the natural frequency $\omega_n$ and on the damping factor $\xi$:

Figure 3 shows an implementation of the controller object of the present invention wherein a different response is established for different frequency ranges ($f_1, f_2,...., f_n$) in the power variation. The sum of the output references of the PLC (23) are applied to the VCO (24), which generates a set of frequency voltages w* and amplitude voltages E*, constituting the virtual internal locomotive force (e) of the power converter.

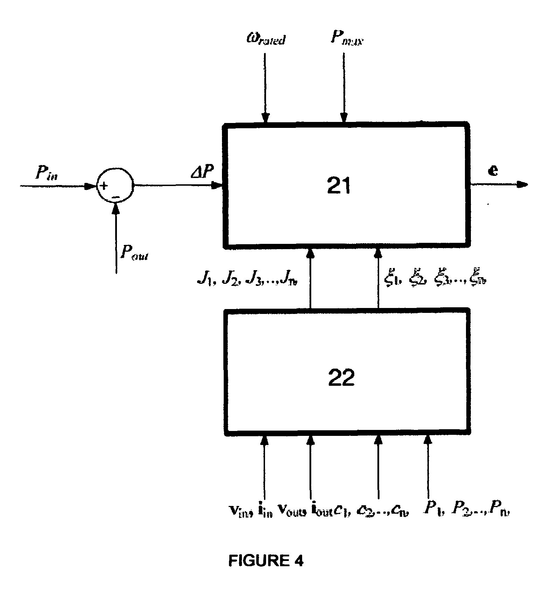

Figure 4 shows a diagram of the controller of the present invention, which in turn comprises a controller of the virtual electromechanical characteristic (21), as well as the controller of inertia and damping factor (22), to which a series of variables of the system are introduced, such as input voltage ($v_{in}$), input intensity ($i_{in}$), output voltage ($v_{out}$), and output intensity ($i_{out}$), which are used selectively depending on the specific algorithm of the controller being applied. The controller of inertia and damping factor (22) also receives a series of input parameters, such as the powers of reference ($P_1, P_2..., P_n$) and the adjustment constants of the response of the controller ($c_1, c_2... , c_n$) for each frequency range. Depending on the variables of the system and the adjustment parameters, the inertia ($J_1, J_2... , J_n$) and the damping factor values ($\xi_1, \xi_2, ... , \xi_n$) are obtained for each frequency at the outlet. These inertia ($J_1, J_2..., J_n$) and damping factor values ($\xi_1, \xi_2, ..., \xi_n$) are introduced as parameters into the controller of the virtual electromechanical characteristic (21). There are other auxiliary parameters supplied to this controller for the calculation of the tuning constants of the power loop controllers (PLC), such as the nominal frequency of the system ($\omega_{rated}$) and the maximum power supplied ($P_{max}$). The input variable of the controller of the virtual electromechanical characteristic (21) is the power difference ($\Delta P$) between the input power ($P_{in}$ input power into the converter) and the power delivered to the grid ($P_{out}$), to finally obtain the set of voltages constituting the virtual internal electromotive force (e) of the power converter at the output of the controller.

Given that the values applied for the inertia coefficient and damping factor can be instantaneously modified for each frequency range, the controller of the electromechanical characteristic achieves great flexibility in the behavior of the power converter, allowing, for example, making a fast connection from the converter to the grid by decreasing the inertia coefficient value and subsequently increasing the value of said coefficient for certain frequency ranges in which there can be power perturbations that should not be followed by the power converter.

**Claims**

1. Controller of the virtual electromechanical characteristic for a static power converter, **characterized in that** the closed loop transfer function relating the power delivered to the grid $P_{out}$ and the input power into the converter $P_{in}$, may be dynamically parameterized by means of, as a minimum, one virtual inertia coefficient and one damping factor to achieve an optimized response to the contour conditions of the power converter.

2. Controller of the virtual electromechanical characteristic according to claim 1, **characterized in that** it implements a power control loop regulated by a PLC (23) ("power loop controller") which receives the power difference ($\Delta P$) existing between the input power ($P_{in}$ input power into the converter) and the power delivered to the grid ($P_{out}$) at the input, as well as a series of parameters determining the value of the inertia coefficient and the damping factor for different frequency ranges ($f_1, f_2..., f_n$), such that the sum of the output references of the PLC (23) are applied to the VCO (24, Voltage Controlled Oscillator), which generates a set of frequency voltages w* and amplitude voltages E*, constituting the virtual internal locomotive force (e) of the power converter.

3. Controller of the virtual electromechanical characteristic according to claim 2, **characterized in that** the PLC (23) is implemented according to the following formula:

$$\text{PLC}(s) = k\,\frac{\omega_c}{s + \omega_c}\,.$$

k being the gain and $\omega_c$ being the cutoff frequency of the controller. These parameters in turn depend on the natural frequency $\omega_n$ and on the damping factor $\xi$:

4. Controller of the virtual electromechanical characteristic according to claim 1, **characterized in that** it includes a controller of the inertia and the damping factor (22) configured to:

   - receive the signals of the input voltage ($v_{in}$), input intensity ($i_{in}$), output voltage ($v_{out}$), and output intensity ($i_{out}$) signals and process them selectively according to a series of adjustment parameters ($c_1, c_2... , c_n$) and powers of reference ($P_1, P_2... , P_n$) for each frequency range, and with all of it
   - generate the virtual inertia ($J_1, J_2, ..., J_n$) and the damping factor vales ($\xi_1, \xi_2, ..., \xi_n$) for each frequency.

5. Controller of the virtual electromechanical characteristic according to claim 1, **characterized in that** the virtual inertia and damping factor parameters are dynamically adapted to the operating conditions, of-

fering a virtual inertia ($J_1$, $J_2$, ..., $J_n$) and damping factor value ($\xi_1$, $\xi_2$, ... , $\xi_n$) for each frequency, such that establishing the capacity presented by the generator to attenuate different power oscillations existing in the grid (inter-plant, inter-area...) and in the primary generation source (mechanical and structural resonances), is possible.

FIGURE 1

FIGURE 2

FIGURE 3

$\omega_{rated}$        $P_{max}$

$P_{in}$    $\Delta P$           $e$

21

$P_{out}$

$J_1, J_2, J_3,.., J_n$        $\xi_1, \xi_2, \xi_3,.., \xi_n$

22

$V_{in}, i_{in}$ $V_{out}, i_{out}$ $c_1, c_2,.., c_n$   $P_1, P_2,.., P_n$

FIGURE 4

# INTERNATIONAL SEARCH REPORT

| | |
|---|---|
| International application No. | |
| PCT/ES2012/000047 | |

**A. CLASSIFICATION OF SUBJECT MATTER**

**See extra sheet**

According to International Patent Classification (IPC) or to both national classification and IPC

**B. FIELDS SEARCHED**

Minimum documentation searched (classification system followed by classification symbols)
H02P, G05F, H02M

Documentation searched other than minimum documentation to the extent that such documents are included in the fields searched

Electronic data base consulted during the international search (name of data base and, where practicable, search terms used)

EPODOC, INVENES, NPL, XPI3E

**C. DOCUMENTS CONSIDERED TO BE RELEVANT**

| Category* | Citation of document, with indication, where appropriate, of the relevant passages | Relevant to claim No. |
|---|---|---|
| A | 28.06.2009, VAN WESENBEECK M P N; DE HAAN S W H; VARELA P; VISSCHER K. PowerTech, 2009 IEEE Bucharest, IEEE, piscataway, NJ, USA. 28.06.2009. PG 1-7. ISBN 978-1-4244-2234-0 ; ISBN 1-4244-2234-5 | 1-5 |
| A | 22.10.2009, TORRES M; LOPES L A C. Virtual synchronous generator control in autonomous wind-diesel power systems. Electrical Power & Energy Conference (EPEC), 2009 IEEE, 22.10.2009. Pg 1-6. ISBN 978-1-4244-4508-0 ; ISBN 1-4244-4508-6. | 1-5 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | | |
| | | "&" | document member of the same patent family |

| | |
|---|---|
| Date of the actual completion of the international search | Date of mailing of the international search report |
| 25/05/2012 | **(26/06/2012)** |
| Name and mailing address of the ISA/ | Authorized officer |
| | L. García Aparicio |
| OFICINA ESPAÑOLA DE PATENTES Y MARCAS Paseo de la Castellana, 75 - 28071 Madrid (España) Facsimile No.: 91 349 53 04 | |
| | Telephone No. 91 3493057 |

Form PCT/ISA/210 (second sheet) (July 2009)

## INTERNATIONAL SEARCH REPORT

| | International application No. |
|---|---|
| | PCT/ES2012/000047 |

| C (continuation). | DOCUMENTS CONSIDERED TO BE RELEVANT | |
|---|---|---|
| Category * | Citation of documents, with indication, where appropriate, of the relevant passages | Relevant to claim No. |
| A | 20.07.2008, DRIESEN J; VISSCHER K. Virtual synchronous generators. Power and Energy Society General Meeting - Conversion and Delivery of Electrical Energy in the 21st Century, 2008 IEEE,20.07.2008. Pg. 1-3 . ISBN 978-1-4244-1905-0 ; ISBN 1-4244-1905-0 | 1-5 |
| A | 15.03.2009, QING-CHANG ZHONG; WEISS G. Static synchronous generators for distributed generation and renewable energy Power Systems. Conference and Exposition, 2009. PES '09. IEEE/PES. 15.03.2009. Pg 1-6. ISBN 978-1-4244-3810-5 ; ISBN 1-4244-3810-1 | 1-5 |

Form PCT/ISA/210 (continuation of second sheet) (July 2009)

**INTERNATIONAL SEARCH REPORT**

International application No.

PCT/ES2012/000047

**CLASSIFICATION OF SUBJECT MATTER**

*H02P9/02* (2006.01)
*G05F1/66* (2006.01)
*H02M7/48* (2007.01)
*H02P23/14* (2006.01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VISSCHER, K. ; DE HAAN, S.W.H.;.** Virtual synchronous machines (VSG's) for frequency stabilisation in future grids with a significant share of decentralized generation. *SmartGrids for Distribution, 2008. IET-CIRED. CIRED Seminar,* 23 June 2008, 1-4
- **T. LOIX ; S. DE BREUCKER ; P. VANASSCHE ; J. VAN DEN KEYBUS ; J. DRIESEN ; K. VISSCHER.** Layout and performance of the power electronic converter platform for the VSYNC project. *PowerTech, 2009 IEEE Bucharest,* 2009
- **BECK, H.-P. ; HESSE, R.** Virtual synchronous machine. *Electrical Power Quality and Utilisation, 2007. EPQU 2007. 9th International Conference,* 09 October 2007, 1-6
- **ZHONG, Q ; WEISS, G.** Synchronverters: Inverters that Mimic Synchronous Generators. *Industrial Electronics, IEEE Transactions,* vol. PP, 1, 0
- **Z. LIDONG ; L. HAMEFORS ; H. P. NEE.** Power-Synchronization Control of Grid-Connected Voltage-Source Converters. *Power Systems, IEEE Transactions,* May 2010, vol. 25, 809-820